# EUROPEAN PATENT APPLICATION

(11) **EP 4 346 119 A1**
(43) Date of publication of application: **03.04.2024**
(21) Application number: 22198319.0
(22) Date of filing: 28.09.2022
(51) Int. Cl.: H04B 7/185, H04B 1/707, H01Q 21/00

(54) **METHOD AND APPARATUS FOR COMMUNICATING TELEMETRY DATA BETWEEN AN AIRBORNE VEHICLE AND A GROUND STATION**

(71) Applicant: Joanneum Research Forschungsgesellschaft mbH, 8010 Graz (AT)
(72) Inventor: EBERT, Johannes, 8111 Gratwein-Straßengel (AT); SCHLEMMER, Harald, 8054 Hitzendorf (AT); SCHMIDT, Michael, 8046 Stattegg (AT)
(74) Representative: Rummler, Felix

(57) **Abstract**

The invention relates to a method and apparatus for transmitting telemetry data of an airborne vehicle (10) to a ground station (12), wherein telemetry data is obtained, a telemetry carrier is generated, the telemetry carrier is spread by a spreading factor, and the spread telemetry carrier is periodically broadcast by an antenna (26) of the airborne vehicle (10). The spreading factor depends on the difference in antenna gain of main lobe and first side lobe of the directional antenna (30) of the ground station (12). Further, a method and apparatus for receiving telemetry data of an airborne vehicle (10) by a ground station (12) are provided. The directional antenna (30) of the ground station (12) is rotated stepwise to search for telemetry data broadcast by the airborne vehicle (10). In each step the directional antenna (30) is rotated by a predetermined angle that depends on its side lobe beamwidth.

## Description

### TECHNICAL FIELD

The present invention relates to methods and apparatuses for wirelessly communicating telemetry data between an airborne vehicle and a ground station. Herein the term "airborne vehicle" includes, amongst others, ultralight aircrafts, UAVs (unmanned aerial vehicles), military aircrafts in addition to civil, manned aircrafts that usually weigh more than ultralight aircrafts. The term "airborne vehicle" comprises planes, helicopters and drones and similar.

### BACKGROUND OF THE INVENTION

Nowadays airborne vehicles such as aircrafts usually include an increasing amount of on-board sensors, such as cameras, for generating payload data during a flight, wherein the payload data shall transmitted to a ground station in real-time for further analysis. The on-board sensors are typically arranged on a sensing platform of the airborne vehicle. Vast amounts of data may be transmitted in real-time from air to ground and vice versa via a bidirectional line-of-sight (LOS) communications link and system.

According to the state of the art so-called Automatic Dependent Surveillance-Broadcast (ADS-B) may be deployed for tracking the position of the aircraft. The aircraft determines its position by means of satellite navigation, for example GPS (Global Positioning System), and periodically transmits telemetry data containing its position for tracking purposes. Such an approach is advocated, e.g., in Schlemmer H., E. Türkyilmaz, M.Schmidt, J. Ebert, H. Mayer (2015), "Design and development of a high throughput airborne line-of-sight communication link", e&i Elektrotechnik und Informationstechnik, volume 132", issue 6 (2015), pages 282-288.

In Schlemmer et al. a sensor platform is mounted on an underfloor pod of the aircraft. Cameras mounted on the sensor platform perform image acquisition. The captured image data (payload data) is pre-processed on-board the aircraft and then transmitted to a ground station via a bidirectional LOS link using a TCP/IP-based transmission protocol such as FTP (file transfer protocol). The IP packets that correspond to the pre-processed image data are encapsulated and coded into frames by means of time division duplexing. The ground station acknowledges correct receipt of the IP packets via the bidirectional LOS link. Otherwise the ground station sends a request for retransmission of the data to the aircraft. To increase the range of the LOS link the ground station deploys a directional antenna instead of an omnidirectional antenna. The tracking of the aircraft is done by means of ADS-B. A GPS receiver on-board the aircraft determines its current position. The determined position is then encoded in an ADS-B (DF 17) message and broadcast. At the ground station an ADS-B receiver and decoder receives the ADS-B message and recovers the current position. An antenna control unit (ACU) of the ground station then controls the rotation of a directional antenna such that it points at the aircraft for receiving the payload data from the aircraft.

ADS-B is standard in most aircrafts in several jurisdictions worldwide. Exceptions are ultralight aircrafts, unmanned aerial vehicles (UAVs) and special organizations such as the military/air forces. However, ADS-B requires an additional transmit-receive channel and additional frequency resources for tracking over and above the channel and resources required for payload data transmission. Furthermore, ADS-B only provides for a position receive interval of 1 second which may result in high jitter due to lost packets/error frames. Moreover, access to add proprietary telemetry information is limited.

In a different approach the ground station comprises several sector antennas (typically six) for covering the entire range of 360°. The strongest received signal is then used for tracking of the aircraft. However, the six sector antennas with their associated radio frequency frontends result in a relatively large and cumbersome complex mounted system that is difficult to transport and not well suited for fast setup. Furthermore, the overall antenna gain achieved with the six sector antennas is rather low compared to the typical antenna gain of a single directional antenna with a beam width of, for instance, +/- 5 degrees.

Regarding the use of telemetry links in airborne applications it is generally referred to CN 107167814 A, CN 111614396 A, CN 112491679 A, CN 110112541 A, US 2009/105892 A1, US 2020/322319 A1, and US 10,530,751 B2.

It is an object of the present invention to provide methods and apparatuses for communicating telemetry data between an airborne vehicle and a ground station which provide for practical, robust, autonomous and resource- and cost-efficient tracking of an airborne vehicle.

### SUMMARY OF INVENTION

The present invention is defined by the independent claims. Advantageous embodiments are defined by the dependent claims.

In order to implement this object, and still further objects of the invention, which will become more readily apparent as the description proceeds, a method of transmitting telemetry data of an airborne vehicle from the airborne vehicle to a ground station is provided. The method that is to be performed at the airborne vehicle comprises the steps of: obtaining the telemetry data, generating a telemetry carrier by modulating the obtained telemetry data onto a carrier (also called: carrier wave or carrier signal), spreading the generated telemetry carrier in the frequency domain by a predetermined spreading factor, and periodically sending, e.g., broadcasting, the spread telemetry carrier by an antenna of the airborne vehicle for the spread telemetry carrier to be received by a ground station.

According to a further aspect of the invention an apparatus for transmitting telemetry data of an airborne vehicle to a ground station is provided, which apparatus may be included in an airborne vehicle. The apparatus comprises a position determining unit, for example a global positioning system, for obtaining the telemetry data, a telemetry modulator configured to generate a telemetry carrier by modulating the obtained telemetry data onto a carrier and to spread the generated telemetry carrier in the frequency domain by a predetermined spreading factor, and an antenna for periodically transmitting the spread telemetry carrier to be received by a ground station.

The spreading factor depends on an antenna gain reduction factor of a directional antenna of the ground station, wherein the antenna gain reduction factor is defined as the difference in antenna gain of a main lobe and a first side lobe of the directional antenna of the ground station, the first side lobe being a first lobe adjacent to the main lobe of the radiation pattern of the directional antenna. The antenna radiation pattern is preferably a radiation pattern in azimuth plane. Additionally (i.e., prior or subsequently), or alternatively, the radiation pattern of the directional antenna in elevation plane may be deployed.

The telemetry data comprises position information of the airborne vehicle, in particular its position in azimuth plane and preferably also its height, altitude and/or elevation. The antenna used for sending or broadcasting the spread telemetry data is preferentially an omnidirectional antenna arranged at the airborne vehicle. Before spreading the telemetry data may be modulated onto the carrier by means of a digital modulation process, in particular by means of BPSK (binary phase-shift keying) or QPSK (quadrature phase-shift keying).

At the ground station, and according to a further aspect of the invention, a method of receiving telemetry data of an airborne vehicle by a ground station comprises the steps of: stepwise rotating a directional antenna of the ground station to search for transmitted telemetry data of an airborne vehicle, upon receipt of a signal de-spreading the received signal in the frequency domain by a predetermined spreading factor and de-modulating the de-spread signal to obtain the telemetry data of the airborne vehicle, and directing the directional antenna at the airborne vehicle using position information included in the telemetry data to receive digital payload data from the airborne vehicle. The directional antenna of the ground station is preferably rotated at a predetermined elevation level around its azimuth axis.

Correspondingly, and according to a still further aspect of the invention, an apparatus for receiving telemetry data of an airborne vehicle by a ground station is provided. The apparatus comprises a directional antenna, an antenna control unit (ACU), and a telemetry demodulator. The ACU is configured to stepwise rotate the directional antenna, preferably at a predetermined elevation level around its azimuth axis, in order to search for transmitted telemetry data of the airborne vehicle. In each step the directional antenna is rotated by a predetermined angle, the predetermined angle depending on the side lobe beam-width of the directional antenna. The ACU is further configured to direct the directional antenna towards the airborne vehicle using the position information included in telemetry data that has been transmitted from the airborne vehicle to receive digital payload data from the airborne vehicle. The telemetry demodulator is configured to, upon receipt of a signal by the directional antenna, de-spread the received signal in the frequency domain by a predetermined spreading factor and to demodulate the de-spread signal to obtain telemetry data of the airborne vehicle. The apparatus for receiving telemetry data of the airborne vehicle may be included in a ground station. The telemetry data may be transmitted by the airborne vehicle in form of a (spread) telemetry carrier.

When stepwise rotating the directional antenna to search for the airborne vehicle, the directional antenna is rotated by a predetermined angle, preferably around its azimuth axis, in each step. This predetermined angle depends on the side lobe beam-width of the radiation pattern of the directional antenna, preferably the radiation pattern of the directional antenna in azimuth plane. This side lobe beam-width is given by the sum of the beam-width of the main lobe, the beam-width of the first side lobe on one side of the main lobe and the beam-width of the first side lobe on the other side of the main lobe. Herein the beamwidth of the main lobe (main lobe beamwidth) is defined by the maximum antenna gain at the center of the main lobe and the angles on each side where the antenna gain is attenuated in particular by 3 dB. The main lobe beamwidth may also be called 3 dB-beamwidth. The beamwidth of the first side lobes on each side of the main lobe beamwidth is given by the angles on each side of the center of the main lobe where the antenna gain is attenuated by the maximum antenna gain.

As in the method of and apparatus for transmitting telemetry data of the airborne vehicle the spreading factor depends on the antenna gain reduction factor of the directional antenna of the ground station, wherein the antenna gain reduction factor is the difference in antenna gain of the main lobe and one of the first side lobes of the directional antenna. After de-spreading the received signal may de-modulated by means of a digital (de-)modulation process, in particular by BPSK or QPSK. Other suitable demodulation processes may be used.

Spreading the telemetry data has the advantage that higher coverage ranges can be achieved than with non-spread data due to lower SNR (signal-to-noise ratio) requirements at the receiving side, i.e. the ground station. For spreading the telemetry data to be sent and for de-spreading the signal received at the ground station preferably direct-sequence spread spectrum (DSSS) is used. DSSS has the further advantage of mitigating effects of interferences, fading and jamming. Moreover, multi-path signals can be more easily discriminated and recovered by means of different spreading factors.

Preferably, the spreading factor depends on a margin factor, in addition to the antenna gain reduction factor of the directional antenna of the ground station. This margin factor accounts for a distance (margin distance) the airborne vehicle can be away from the ground station, while its telemetry data can still be received by the directional antenna of the ground station. Preferably, the margin factor is 6 dB. With a margin factor at 6 dB telemetry data can be received at twice the distance when payload data can be received from the airborne vehicle. The spreading factor is in particular between 2 and 1024. For further details and examples it is referred to the figure description below.

The present invention provides robust, autonomous and efficient methods and apparatuses for tracking an airborne vehicle at relatively high range. The same antennas and allocated radio frequency (RF) frontends can be used at each of the aircraft vehicle and the ground station for communicating telemetry data and payload data. Thus, hardware and software resources, and associated weight and costs, can be advantageously saved. No separate, additional carrier wave and bandwidth need to be provided for transmitting the telemetry data in addition to the carrier wave and bandwidth used for transmitting the payload data. Furthermore, differently from ADS-B, the present invention is also suitable for ultralight aircrafts, UAVs (unmanned aerial vehicles), military aircrafts in addition to civil, manned aircrafts, which do not have or do not wish to use ADS-B because of cost and/or security reasons.

### BRIEF DESCRIPTION OF THE DRAWINGS

Further advantageous features and applications of the invention can be found in the dependent claims, as well as in the following description of the drawings illustrating the invention. In the drawings like reference signs designate the same or similar parts/components throughout the several figures of which:
Fig. 1 shows an example antenna radiation pattern of a directional antenna of a ground station in azimuth plane;
Fig. 2 shows example spectra of a carrier modulated with payload data of an airborne vehicle (Fig. 2a)), an (unspread) carrier modulated with telemetry data of the airborne vehicle (Fig. 2b)), and a spread carrier modulated with telemetry data of the airborne vehicle (Fig. 2c));
Fig. 3 shows a schematic view of an airborne vehicle and a ground station communicating telemetry data and payload data with each other; and
Fig. 4 shows flowcharts of a method of transmitting telemetry data of an airborne vehicle to a ground station (Figure 4a) and a method of receiving telemetry data of an airborne vehicle by a ground station (Figure 4b) according to the invention.

### DETAILED DESCRIPTION OF THE PREFERRED EMBODIMENTS

In the present invention the directional antenna of the ground station, which is normally only used for receiving payload data from an airborne vehicle, is also used to search for and track the airborne vehicle by taking advantage not only of the main lobe but also of the side lobes of the directional antenna's radiation pattern. Compared with the prior art described, e.g., in Schlemmer et al. as mentioned above in the background section, in the present invention the same antenna of the ground station is used to receive payload data transmitted from an airborne vehicle and to search for and track the airborne vehicle. That is, the directional antenna provided at the ground station shall be used to scan for telemetry data broadcast from the airborne vehicle. After receipt of the telemetry data and extracting the position of the airborne vehicle from the received telemetry data, the directional antenna of the ground station is directed at the airborne vehicle for receiving payload data from the airborne vehicle. In order to use the directional antenna of the ground station also for searching and tracking not only the main lobe but also the side lobes, in particular the first side lobes that are adjacent to the main lobe on each side, of the radiation pattern of the directional antenna are deployed for scanning. The first side lobes have a reduced antenna gain compared to the main lobe.

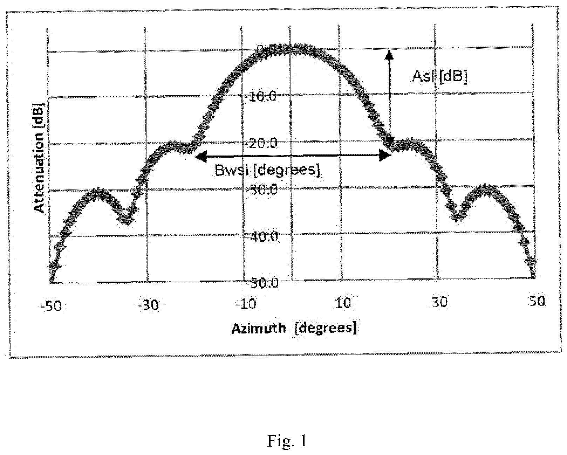

Figure 1 shows an example antenna radiation pattern of a directional antenna of a ground station in the azimuth plane. As can be seen, the antenna gain of each first side lobe on either side of the main lobe is reduced by a reduction factor Asl [dB] (also referred to as antenna gain reduction factor) with respect to the antenna gain of the main lobe. Deploying the first side lobes of the antenna in addition to the main lobe for searching and receiving the telemetry data (including position information) of the airborne vehicle allows to search in a wider angle. This wider angle corresponds to the sum of the beamwidth of the main lobe, the beamwidth of the first side lobe on the left side of the main lobe and the beamwidth of the first side lobe on the right side of the main lobe. This sum is also called side lobe beamwidth Bwsl. Herein, the terms "left" and "right" refer to the representation in Figure 1. The beamwidth of the main lobe (main lobe beamwidth) is defined by the maximum antenna gain at the center of the main lobe and the angles on each side where the antenna gain is attenuated by 3 dB. The main lobe beamwidth may also be called 3dB-beamwidth. The beamwidth of the first side lobes on each side of the main lobe beamwidth is given by the angles on each side of the center of the main lobe where the antenna gain is attenuated by the maximum antenna gain. The side lobes may also be called side shoulders.

In the example shown in Figure 1 the main lobe has a gain of 21 dBi compared to the first side lobes, and a 3 dB-beamwidth (main lobe beamwidth) of +/- 7 degrees in the azimuth plane. As the antenna gain of the first side lobes shall also be used for searching and receiving of the telemetry data, the beamwidth deployed for searching is broadened to +/- 16.5 degrees (the side lobe beam-width).

The antenna radiation pattern of the directional antenna at the ground station in the elevation plane may be similar to the antenna radiation pattern in the azimuth plane. In the present invention, preferably the antenna radiation pattern in the azimuth plane at an elevation level/elevation angle equal to or smaller than half of the 3 dB-beamwidth of the main lobe (half of the main lobe beamwidth) in azimuth plane is deployed. In the example described above in connection with Figure 1 the elevation angle is hence 7 degrees. With such an elevation angle the elevation angle is chosen such that it has basically no impact on the attenuation in the antenna radiation pattern in the azimuth plane. This choice of elevation level/elevation angle corresponds to a scenario, where the horizon is basically freely visible for the entire azimuth angle range. Typically the airborne vehicle shall be captured at long/wide distances where the elevation angle is small. For an exemplary distance of 10 kilometres and a height of 1000 m the resultant elevation angle is 5.73 degrees, i.e., smaller than half of the main lobe beamwidth (3 dB-beamwidth) computed for the example shown in Figure 1.

If obstacles like buildings or mountains are within the free line of sight between the directional antenna of the ground station and the aircraft, or in case the aircraft operates at a much higher altitude than would be searchable with an elevation angle of half the 3 db beamwidth, then a correspondingly higher elevation angle may be chosen.

When searching for the airborne vehicle the directional antenna of the ground station is stepwise rotated around its azimuth axis at a predetermined elevation angle in a preferred embodiment, the elevation angle is preferable half the 3 dB-beamwidth of the main lobe (main lobe bandwidth) in the azimuth plane or smaller, as indicated above. In each rotation step the directional antenna is rotated by the side lobe beamwidth Bwsl to cover a sector of Bwsl. The directional antenna is rotated until telemetry data of an airborne vehicle is received. In the worst case the directional antenna is rotated until it has scanned the entire hemisphere, i.e., 360 degrees. With a side lobe beamwidth of Bwsl, this results in S_total = 360/Bwsl rotation steps (and sectors scanned). In the above example where Bwsl = +/- 16.5 degrees, S total amounts to 11 steps for a full antenna search circle. After the directional antenna has scanned the entire hemisphere without finding the airborne vehicle, it starts anew. If no airborne vehicle is found, and no information about an appropriate choice of elevation angle is available, then the searching for the airborne vehicle with the directional antenna of the ground station may be performed in the elevation plane by stepwise rotating the directional antenna around its elevation axis, similarly as described above for its rotating around its azimuth axis.

The capture time t_s it takes for searching and detecting the airborne vehicle depends on the number of sectors that have to be scanned (Sscanned) and the time t_sector for moving/rotating the directional antenna to the next sector and extracting the airborne vehicle position (and preferably its height, altitude and/or elevation) from the received telemetry data. I.e., capture time t_s = t_sector x S_scanned, where "x" represents the multiplication sign. In the worst case the entire hemisphere needs to be scanned leading to a capture time t_s_total which is equal to t_sector x S total. If, again in the worst case, the airborne vehicle moves at a maximum velocity v_airmax this results in a margin distance d_margin = t_s_total x v_airmax, at which it shall be possible to detect the airborne vehicle with the directional antenna of the ground station. Assuming, for example, that t_sector = 9 seconds, then t_s_total = 99 seconds for the above described example, where S total = 11 sectors/steps. Hence, a directly approaching airborne vehicle that moves at a speed of 50 m/sec can be detected after it has covered a maximum distance of 5 km (d margin = 99 seconds x 50 m/sec). If the airborne vehicle can be found in the first or an earlier sector, the capture time is accordingly reduced.

After telemetry data of the airborne vehicle has been received the directional antenna is directed towards the airborne vehicle to receive payload data from the airborne vehicle while continuously tracking the airborne vehicle. This means that the telemetry data is received with the same antenna gain as the payload data, with the payload data being received within the main lobe beamwidth but the telemetry data being received within the side lobe beamwidth Bwsl of the radiation pattern of the directional antenne. To compensate for the reduction factor Asl that the first side lobes are attenuated with respect to the main lobe the telemetry data are spread in the frequency domain by a predetermined spreading factor before transmitting/broadcasting from the airborne vehicle. For spreading of the telemetry data preferably so-called direct-sequence spread spectrum (DSSS) is used which has the additional advantage that it is resistant against interferences (see, e.g., https://en.wikipedia.org/wiki/Direct-sequence spread spectrum). Other spread-spectrum modulation technique may also be used.

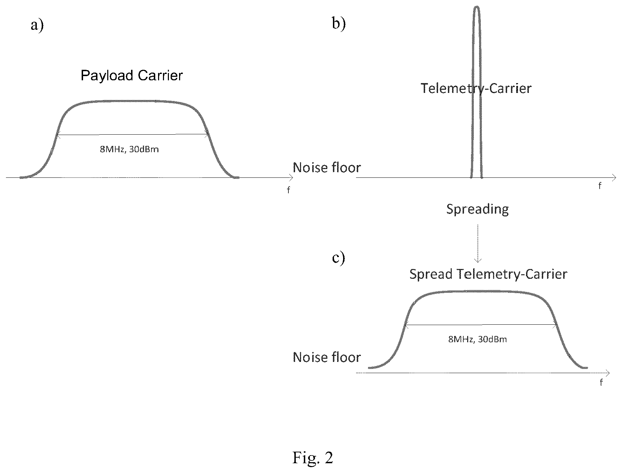

The spreading factor is used to spread a signal over a wider bandwidth than before spreading. Figure 2 demonstrates the principle for telemetry data that shall be broadcast from the airborne vehicle. Figure 2a) shows an example of a spectrum of a carrier (payload carrier), where the carrier has been modulated with typical payload data, for digital transmission from the airborne vehicle and to the ground station. As an example the payload carrier has a symbol rate of 10 Msymbols/s and is sent with a power of 1 Watt.

Figure 2b) shows an example of a carrier (telemetry carrier), where the carrier has been modulated with typical telemetry data including position information. The modulation of the carriers (both, payload and telemetry) may be performed, for instance, with BPSK or QPSK. As can be seen the information rate of the payload data is much higher than the information rate of the telemetry data, while the amplitude at the center frequency of the telemetry data is usually higher than the corresponding amplitude of the payload data. A typical data rate, in particular symbol rate, of the telemetry carrier is in the range of 1 and 20 kBit/s, in particular in the range of 1 and 20 kSymbols/s. The carrier that is modulated may have a carrier frequency of 2100 MHz and a bandwidth of 12 MHz. Same or different carriers may be used for telemetry and payload data.

Figure 2c) shows an example where the telemetry carrier to be transmitted/broadcast has been spread in line with the present invention. For spreading the telemetry carrier over a wider bandwidth by means of DSSS, for example, the telemetry carrier is multiplied with a so-called spreading sequence (also called chip sequence). Each spreading-sequence bit, which is called chip, has a much shorter duration (i.e., larger bandwidth) than bits of the unspread telemetry carrier. The resultant spread telemetry carrier has a higher information rate and, hence, a wider bandwidth than the original, unspread telemetry carrier.

At the ground station, the signal received from the airborne vehicle is de-spread to recreate the unspread telemetry carrier. De-spreading is achieved by multiplying the signal received from the airborne vehicle with the same spreading sequence/chip sequence as used when generating the spread telemetry carrier at the airborne vehicle. After de-spreading the telemetry data including position information, i.e., position and, if applicable, height, altitude and/or elevation, can be obtained by demodulating the re-created telemetry carrier, for instance, by means of BPSK or QPSK as has been applied at the airborne vehicle.

In the present invention the spreading factor, which is defined as the quotient of the chip rate and the bit rate, is preferably chosen such that the symbol rate of the spread telemetry carrier corresponds to the symbol rate of the payload carrier. Choosing the spreading factor in such a way has the advantage that the antenna gain reduction of the first side lobes of the directional antenna, when compared with the gain of the main lobe, is compensated, and the directional antenna can also be used for searching and tracking the airborne vehicle, i.e. its broadcast telemetry data, and for receiving payload data once the directional antenna has been locked to the airborne vehicle. That is, the spreading factor is selected such that it depends on the antenna gain reduction factor Asl of the directional antenna of the ground station.

According to a preferred embodiment the spreading factor is chosen such that the telemetry data of the airborne aircraft can be received by the directional antenna of the ground station at a larger distance (corresponding to the above-referred margin distance) than the payload data. In particular, the telemetry data shall be received by at twice the distance the payload data can be received. That is, the spreading factor preferably also depends on a margin factor, in addition to the antenna gain reduction factor Asl of the directional antenna of the ground station. This margin factor accounts for a margin distance the airborne vehicle can be away from the ground station while its telemetry data can still be received by the directional antenna of the ground station. In particular, the spreading factor is determined by the next power of two that is higher than 10 to the power of the sum of the antenna gain reduction factor Asl of the directional antenna of the ground station and the margin factor with this sum divided by 10. I.e., the spreading factor is preferably given by the power of 2 that is higher than 10^{(Asl+margin factor)/10}.

For example, if the antenna gain reduction factor Asl of the directional antenna of the ground station is 21 dB and the telemetry data shall be received at twice the distance the payload data can be received, which corresponds to a margin factor of 6 dB, then this results in a spreading factor of 512 (the next power of two of 501). If, for example, the antenna gain reduction factor Asl is 24 dB and the margin factor is 6 dB, then the spreading factor is 1024. The spreading factor lies in particular between 2 and 1024.

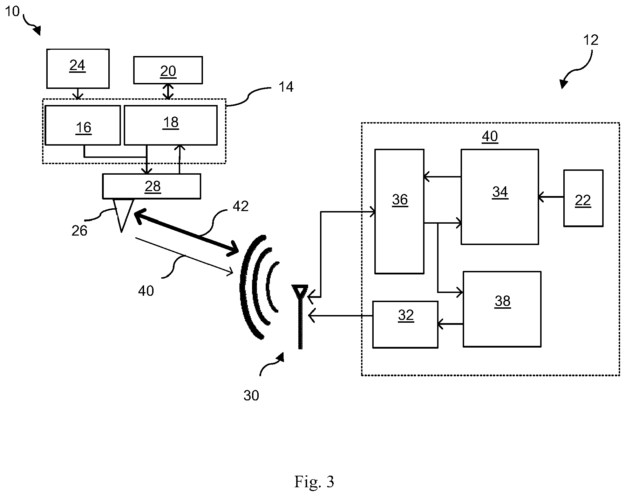

Figure 3 shows a preferred embodiment of an airborne vehicle 10, in particular an aircraft, and a ground station 12. The airborne vehicle 10 comprises an airborne processing unit 14 with a telemetry modulator 16 for processing telemetry data 24 and an airborne user data modem 18, preferably a broadband transmission modem, for modulating digital payload data 20 captured by sensors of the airborne vehicle 10 onto a carrier (resulting in the payload carrier exemplarily shown in Figure 2a)) to be transferred to the ground station 12, and for demodulating user data 22 received from the ground station 12, such as, e.g., payload requests of a user. The data captured by the sensors of the airborne vehicle may, for example, be video data as captured by a camera or weather data. The telemetry data 24 comprises position information of the airborne vehicle 10 such as its position and preferably its height, altitude and/or elevation. The telemetry data 24 is obtained by a position determining unit, for example a global positioning system (GPS) arranged at the airborne vehicle 10. Both the telemetry data 24 and the payload data 20 are sent/broadcast by an omnidirectional antenna 26 arranged at the airborne vehicle 10 and an airborne transceiver 28 allocated to and upstream of the omnidirectional antenna 26. The airborne transceiver 28 in particular includes a radio frequency (RF) frontend. The telemetry data 24 is sent periodically, e.g., once or twice per second.

The telemetry modulator 16 is configured to generate a telemetry carrier by modulating the telemetry data 24 onto a carrier, and spread the generated telemetry carrier in the frequency domain by a predetermined spreading factor preferably stored in a memory at the airborne vehicle 10. The spread telemetry carrier is then broadcast via the omnidirectional antenna 26 to be received by the ground station 12. The telemetry modulator 16 and the airborne user data modem 18 may be realized by hardware or software, or a combination of both. They (i.e., the airborne processing unit 14) constitute the "digital part" of the airborne vehicle 10. The apparatus for transmitting telemetry data of the invention at least comprises the antenna 26, the telemetry modulator 16 and a position determining unit (also indicated by reference sign 24 in Figure 3).

The ground station 12 comprises a directional antenna 30 configured for receiving payload data 20 from an airborne vehicle 10, and an antenna control unit (ACU) 32. According to a preferred embodiment, the ACU 32 is configured to stepwise rotate the directional antenna 30 at a predetermined elevation level/elevation angle of preferably half the 3 db-beamwidth (i.e., half the main lobe beamwidth) of the directional antenna 30 around its azimuth axis in order to search for transmitted telemetry data (in form of a spread telemetry carrier) of an airborne vehicle 10. In each step the directional antenna is rotated by a predetermined angle around its azimuth axis. The predetermined angle depends on the side lobe beamwidth Bwsl of the radiation pattern of the directional antenna 30.

The ground station 12 further comprises a telemetry demodulator 38 that is configured to de-spread a signal received by the directional antenna 30 during its stepwise rotation by a predetermined spreading factor and to de-modulate the de-spread signal to obtain telemetry data 24 (including position information) of the airborne vehicle 10 (when the received signal corresponds to the broadcast spread telemetry carrier of the airborne vehicle 10). The spread telemetry carrier is received via the unidirectional communications link 40 from the airborne vehicle 10.

The ACU 32 is further configured to direct the directional antenna 30 towards the airborne vehicle 10 using the position information included in and extracted from the telemetry data 20. When the directional antenna 30 is pointed at the airborne vehicle using the extracted position information, payload data 20 (i.e., the payload carrier) can be received by the directional antenna 30 and transferred via the downstream ground transceiver 36, which in particular includes an RF frontend, to the ground user data modem 34 for demodulating the payload carrier to recreate the original payload data 20. User data 22, such as user instructions, which shall be transmitted to the airborne vehicle 10, is modulated by the ground user data modem 34, preferably a broadband transmission modem, onto a carrier to be transmitted via the now position-locked directional antenna 30 from the ground station 12 to the airborne vehicle 10. The payload data 20 and the user data 22 are transferred via a bidirectional communications link 42.

The ground transceiver 36, the ground user data modem 34, the ACU 32, and the telemetry demodulator 38 preferably constitute a light-of-sight (LOS) ground terminal 40 of the ground station 12. The LOS ground terminal 40 forms together with the directional antenna 30 of the ground station 12, and the airborne transceiver 28, the telemetry modulator 16, the airborne user data modem 18 and the omnidirectional antenna 26 of the airborne vehicle 10 an LOS system. For example, the telemetry demodulator 36 and the ground user data modem 34 may be realized by hardware or software, or a combination of both. The apparatus for receiving telemetry data of the invention at least comprises the directional antenna 30, the telemetry demodulator 38 and the ACU 32.

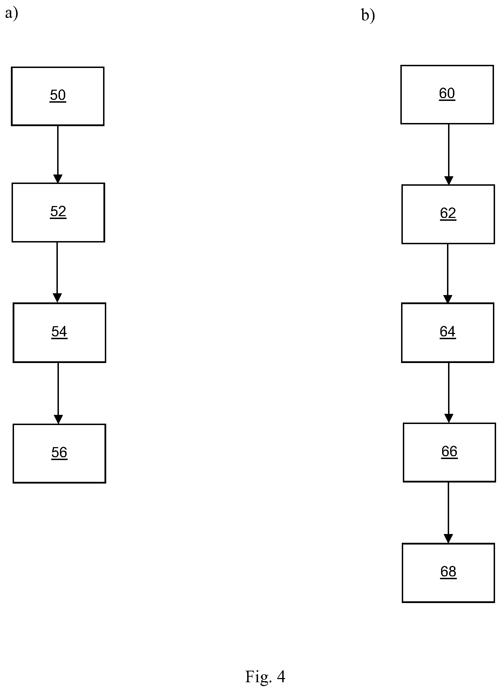

Figure 4a) shows a flowchart of a method of transmitting telemetry data of the airborne vehicle 10 to the ground station 12 according to the invention as may be performed at the airborne vehicle 10 of Figure 3. Figure 4b) shows a flowchart of a method of receiving telemetry data of the airborne vehicle 10 by the ground station 12 as may be performed at the ground station of Figure 3.

In step 50 of the method of transmitting telemetry data shown in Figure 4a) telemetry data including position information of the aircraft is obtained, for example by a global positioning system of the airborne vehicle 10. In subsequent step 52 a telemetry carrier is generated by the telemetry modulator 16 of the airborne vehicle by modulating the telemetry data onto a carrier. For modulation BPSK or QPSK may be deployed, in particular QPSK with a code rate of 1/2 or 1/3. Other modulation schemes are possible. In subsequent step 54 the telemetry carrier generated in step 52 is spread in the frequency domain by the telemetry modulator 16 by a predetermined spreading factor, preferably by deploying direct-sequence spread spectrum (DSSS). The spreading factor is chosen as described above in conjunction with Figure 2. In subsequent step 56 the spread telemetry carrier created in step 54 is broadcast/transmitted by the omnidirectional antenna 26 of the airborne vehicle 10 in order to be received by the ground station 12. The spread telemetry carrier (and hence the telemetry data) is periodically, for example 1-2 times per second, broadcast/sent.

In step 60 of the method of receiving telemetry data according to a preferred embodiment that is shown in Figure 4b) the directional antenna 30 of the ground station 12 is rotated stepwise at a predetermined elevation level/elevation angle of preferably half the 3 db beamwidth (i.e., half the main lobe beamwidth) around its azimuth axis by the ACU 32 of the ground station 12 in order to search for the airborne vehicle 10, i.e., transmitted telemetry data of the airborne vehicle 10. In each rotation step the directional antenna 30 is rotated by a predetermined angle around its azimuth axis. The predetermined angle depends on the side lobe beamwidth Bwsl of the antenna pattern of the directional antenna 30 as described above in conjunction with Figure 1. If the directional antenna 30 receives a signal in one of the rotation steps, then the received signal is de-spread in the frequency domain by a predetermined spreading factor in subsequent step 62, preferably by deploying DSSS, by the telemetry demodulator 38. The spreading factor used in step 62 is the same as the spreading factor used in step 54 of the method of transmitting telemetry data depicted in Figure 4a), and it is referred to the description of Figure 2 in this respect. In subsequent step 64 the de-spread signal is demodulated by the telemetry demodulator 38 to obtain the telemetry data 24 of the airborne vehicle 10 from which position information of the airborne vehicle 10 can be extracted. For demodulation BPSK or QPSK may be deployed, in particular QPSK with a code rate of 1/2 or 1/3. Other demodulation schemes are possible. In subsequent step 66 the directional antenna 26 of the ground station 12 is pointed at the airborne vehicle 10 for tracking the airborne vehicle 10 by means of its telemetry data 24, and for receiving digital payload data 20, e.g., video data captured by a camera arranged at the airborne vehicle 10, from the airborne vehicle 10. Then, in subsequent step 68 payload data 20 from the airborne vehicle 10 can be received by the directional antenna 30 of the ground station via the bidirectional communications link 42, and user data 22, such as user requests for particular payload data, can be transmitted from the ground station 10 to the airborne vehicle 12 via the bidirectional communications link 42.

## Claims

1. Method of transmitting telemetry data of an airborne vehicle (10) to a ground station (12), the method comprising the steps of:
obtaining the telemetry data;
generating a telemetry carrier by modulating the obtained telemetry data onto a carrier;
spreading the generated telemetry carrier in the frequency domain by a predetermined spreading factor; and
periodically transmitting the spread telemetry carrier by an antenna (26) of the airborne vehicle (10) for the spread telemetry carrier to be received by a ground station (12),
wherein the spreading factor depends on an antenna gain reduction factor (Asl) of a directional antenna (30) of the ground station (12), the antenna gain reduction factor (Asl) being the difference in antenna gain of a main lobe and a first side lobe of the directional antenna (30) of the ground station (12).

2. Method of claim 1, wherein direct-sequence spread spectrum (DSSS) is used for spreading the generated telemetry carrier.

3. Method of receiving telemetry data of an airborne vehicle (10) by a ground station (12), the method comprising the steps of:
stepwise rotating a directional antenna (30) of the ground station (12) in order to search for transmitted telemetry data of the airborne vehicle (10), wherein in each step the directional antenna (30) is rotated by a predetermined angle, the predetermined angle depending on a side lobe beamwidth (Bwsl), the side lobe beamwidth (Bwsl) being the sum of the beamwidth of a main lobe and the beamwidths of two first side lobes on each side of the main lobe,
upon receipt of a signal, de-spreading the received signal in the frequency domain by a predetermined spreading factor and demodulating the de-spread signal to obtain telemetry data of the airborne vehicle (10), wherein the spreading factor depends on an antenna gain reduction factor (Asl) of the directional antenna (30) of the ground station (12), the antenna gain reduction factor (Asl) being the difference in antenna gain of the main lobe and one of the first side lobe of the directional antenna (30) of the ground station (12), and
directing the directional antenna (30) towards the airborne vehicle (10) using position information included in the telemetry data to receive digital payload data from the airborne vehicle (10).

4. Method of claim 3, wherein direct-sequence spread spectrum (DSSS) is used for de-spreading the received signal.

5. Method of one of the preceding claims, wherein the spreading factor depends on a margin factor in addition to the antenna gain reduction factor (Asl) of the directional antenna (30) of the ground station (12), the margin factor accounting for a margin distance the airborne vehicle (10) may be away from the ground station (12).

6. Method of one of the preceding claims, wherein the spreading factor is determined by the next power of two that is higher than 10 to the power of the sum of the antenna gain reduction factor (Asl) of the directional antenna (30) of the ground station (12) and the margin factor with the sum divided by 10.

7. Method of one of the preceding claims, wherein the spreading factor is between 2 and 1024.

8. Apparatus for transmitting telemetry data of an airborne vehicle (10) to a ground station (12), the apparatus comprising:
a position determining unit (24) for obtaining the telemetry data;
a telemetry modulator (16) configured to:
generate a telemetry carrier by modulating the obtained telemetry data onto a carrier; and
spread the generated telemetry carrier in the frequency domain by a predetermined spreading factor; and
an antenna (26) for periodically transmitting the spread telemetry carrier to be received by a ground station (12),
wherein the spreading factor depends on an antenna gain reduction factor (Asl) of a directional antenna (30) of the ground station (12), the antenna gain reduction factor (Asl) being the difference in antenna gain of a main lobe and a first side lobe of the directional antenna (30) of the ground station (12).

9. Apparatus for receiving telemetry data of an airborne vehicle (10) by a ground station (12), the apparatus comprising:
a directional antenna (30);
an antenna control unit (32) configured to:
stepwise rotate the directional antenna (30) in order to search for transmitted telemetry data of the airborne vehicle (10), wherein in each step the directional antenna (30) is rotated by a predetermined angle, the predetermined angle depending on a side lobe beamwidth (Bwsl), the side lobe beamwidth (Bwsl) being the sum of the beamwidth of a main lobe and the beamwidths of two first side lobes on each side of the main lobe; and
direct the directional antenna (30) towards the airborne vehicle (10) using position information included in telemetry data transmitted from the airborne vehicle to receive digital payload data from the airborne vehicle (10); and
a telemetry demodulator (38) configured to, upon receipt of a signal, de-spread the received signal in the frequency domain by a predetermined spreading factor and demodulate the de-spread signal to obtain telemetry data of the airborne vehicle (10), wherein the spreading factor depends on an antenna gain reduction factor (Asl) of the directional antenna (30), the antenna gain reduction factor (Asl) being the difference in antenna gain of the main lobe and one of the first side lobe of the directional antenna (30).

10. Apparatus of claim 8 or 9, wherein the spreading factor depends on a margin factor in addition to the antenna gain reduction factor (Asl) of the directional antenna (30) of the ground station (12), the margin factor accounting for a margin distance the airborne vehicle (10) may be away from the ground station (12).

11. Apparatus of one of claims 8 to 10, wherein the spreading factor is determined by the next power of two that is higher than 10 to the power of the sum of the antenna gain reduction factor (Asl) of the directional antenna (30) of the ground station (12) and the margin factor with the sum divided by 10.

12. Apparatus of one of claims 8 to 11, wherein the spreading factor is between 2 and 1024.
